# EUROPÄISCHE PATENTANMELDUNG

(11) **EP 2 401 946 A1**
(43) Veröffentlichungstag der Anmeldung: **04.01.2012**
(21) Anmeldenummer: 11003973.2
(22) Anmeldetag: 13.05.2011
(51) Int. Cl.: A47J 31/44, G01D 5/14

(54) **Kaffeevollautomat mit einer Positionserfassungseinrichtung und/oder Stellgeschwindigkeitserfassungseinrichtung**

(30) Priorität: 29.06.2010 DE 102010025530
(71) Anmelder: Eugster/Frismag AG, 8580 Amriswil (CH)
(72) Erfinder: Stürcken, Holger, 8586 Erlen (CH); Tong, Thinh-Khin, 9403 Goldach (CH)
(74) Vertreter: Schubert, Siegmar

(57) **Zusammenfassung**

In einem Kaffeevollautomaten mit einer Positionserfassungseinrichtung und/oder Stellgeschwindigkeitserfassungseinrichtung an einer positionierbaren bzw. verstellbaren Einheit des Kaffeevollautomaten, ist mit einem Antriebsstrang der positionierbaren bzw. verstellbaren Einheit ein ferromagnetisches Zahnrad (1) drehbar verbunden. Die Positionserfassungseinrichtung und/oder Stellgeschwindigkeitserfassungseinrichtung umfasst eine Hallsensor-/Magneteinheit (4), die gegenüber einer Verzahnung des ferromagnetischen Zahnrads (1) angeordnet ist.

## Beschreibung

Die Erfindung betrifft einen Kaffeevollautomaten mit einer Positionserfassungseinrichtung und/oder Stellgeschwindigkeitserfassungseinrichtung an einer positionierbaren bzw. verstellbaren Einheit des Kaffeevollautomaten, insbesondere einer Brüheinheit und/oder eines Teils der Brüheinheit.

Bei einer bekannten Espressomaschine mit einem zwangsgesteuerten Hubkolben und einem Schlitten mit einem Ausschieber, der über einer Öffnung der Brühkammer verfahrbar ist und die Öffnung der Brühkammer in einer Arbeitsstellung des Schlittens mittels eines kolbenförmigen Abschnitts auf der Unterseite des Schlittens abdichtet, ist eine die Umfangswandung der Brühkammer bildende Brühkammerhülse zwangsgesteuert in einer Arbeitsstellung des Schlittens in eine Dichtposition verfahrbar und nach einem Brühvorgang in eine Ruheposition zurückfahrbar (DE 20 2004 018 776 U1). Ein Hubkolben der Brühkammer steht über einen Spindelzylinder mit einem elektromotorischen Hubkolbenantrieb in Verbindung, der einen Motor und ein zugehöriges Getriebe umfasst. Der Schlitten mit dem kolbenförmigen Abschnitt kann durch einen weiteren elektromotorischen Antrieb verschoben werden, der ebenfalls einen Motor und ein zugehöriges Getriebe umfasst. Mit dem Getriebe des Schlittenantriebs stehen eine Sperrscheibe und zwei Nockenscheiben in Verbindung, welche die Positionen des Schlittens sowie teilweise die Bewegungen des Hubkolbens über zugehörige Kontakte steuern. Hierbei werden die Positionen des Spindelzylinders, des mit ihm verbundenen Hubkolbens und über diesen mittelbar der Brühkammerhülse, wenn sie an den Hubkolben angedrückt wird, erfasst, und zwar durch einen Fußkontakt und einen Kopfkontakt, die durch einen Betätigungsarm an dem Spindelzylinder betätigbar sind und in einem Stromkreis des Motors des Hubkolbenantriebs angeordnet sind. Zur genauen Einstellung der Endpositionen des Hubkolbens sind der Fußkontakt und der Kopfkontakt einzujustieren.

Letzteres gilt auch für einen zusätzlichen Brühkammerhülsenpositionskontakt, mit dem die Position der Brühkammerhülse in Abdichtstellung an dem Schlitten sicherheitshalber signalisiert werden kann, um einen Brühvorgang zu gestatten.

Der oben genannte Kopfkontakt, der Fußkontakt und der Brühkammerhülsenpositionskontakt könnten durch einen Mikroschalter realisiert sein.

Weiterhin kann der Spindelzylinder dieser bekannten Espressomaschine an dem Hubkolben mit einem Sensor mit Encoder ausgerüstet sein, um die Verstellgeschwindigkeit des Spindelzylinders zu messen und daraus eine Stoppposition des Hubkolbens zu bestimmen, wenn das in die Brühkammer eingegebene Kaffeemehl vor dem Brühvorgang unabhängig von der Kaffeemenge in einem definierten Maß vorverdichtet ist. Hierzu misst der Sensor mit Encoder die Aufwärtsbewegung des Hubkolbens durch Erfassung der Drehgeschwindigkeit des Spindelzylinders. Bei Erreichen eines bestimmten Geschwindigkeitsabfalls, der durch die Belastung des Motors bei der Kaffeemehlverdichtung verursacht wird, schaltet der Encoder den Motor ab. Wenn der Sensor jedoch, wie in der Praxis üblich, zur Erfassung des Motorstroms ausgebildet ist und die Aufwärtsbewegung des Hubkolbens daraus abgeleitet wird, dass die Drehzahl eines Gleichstrommotors im Prinzip reziprok zur Stromaufnahme ist, muss mit Ungenauigkeiten dieser indirekten Drehzahlbestimmung und damit Füllhöhenbestimmung gerechnet werden.

Der vorliegenden Erfindung liegt die Aufgabe zugrunde, unter Vermeidung der Nachteile der bisher in Kaffeevollautomaten üblichen Positionserfassungseinrichtungen bzw. Stellgeschwindigkeitserfassungseinrichtungen solche einzusetzen, die keine aufwendige Justierung benötigen bzw. gegenüber Toleranzen mechanischer Komponenten unabhängig sind, einfach montierbar sind, ohne bewegliche Kontakte keinem Verschleiß unterworfen sind, zuverlässig und genau sind, insbesondere von Temperaturschwankungen weitgehend unbeeinflusst sind und eine lange Lebensdauer erwarten lassen.

Diese Aufgabe wird mit einem Kaffeevollautomaten gelöst, der die Merkmale des Anspruchs 1 aufweist, und zwar als Positionserfassungseinrichtung und/oder Stellgeschwindigkeitserfassungseinrichtung eine Hallsensor-/Magneteinheit, die gegenüber einer Verzahnung eines ferromagnetischen Zahnrads ortsfest angeordnet ist, welches mit einem Antriebsstrang der positionierbaren bzw. verstellbaren Einheit des Kaffeevollautomaten drehbar verbunden ist.

Mit dem Hallsensor der vorzugsweise ortsfest montierten Hallsensor-/Magneteinheit wird eine Hallspannung erzeugt, die im Idealfall proportional zur magnetischen Flussdichte in dem Hallsensor ist, wobei die magnetische Flussdichte von der Position der Verzahnung des dem Hallsensor gegenüberstehenden ferromagnetischen Zahnrads abhängt. Der magnetische Fluss wird durch den Magneten der Hallsensor-/Magneteinheit erzeugt und verläuft großen Teils über die Verzahnung des Zahnrads, dessen Stellung gegenüber dem Hallsensor der Hallsensor-/Magneteinheit die magnetische Flussdichte in dem Hallsensor beeinflusst. Die bei Drehung des ferromagnetischen Zahnrads entstehende periodische Hallspannung als analoges Signal der Drehstellung des ferromagnetischen Zahnrads bzw. dessen Drehgeschwindigkeit kann mit unkomplizierten elektronischen Mitteln, insbesondere einem Impulsformer, aufbereitet und in einem Zähler gezählt werden bzw. in einem Analog-Digital-Umsetzer digitalisiert werden, woraus sich mit Datenverarbeitungsmitteln einfach die Position des Zahnrads bzw. dessen Drehgeschwindigkeit in Form digitaler Daten weiter ausgewertet werden kann, beispielsweise mit einer vorgegebenen Sollposition verglichen werden kann, und zu einer Steuerung des Motors in dem Antriebsstrang der überwachten positionierbaren bzw. verstellbaren Einheit des Kaffeevollautomaten verwendet werden kann und/oder einer Bedienungsperson des Kaffeevollautomaten angezeigt werden kann.

Insbesondere kann die Hallsensor-/Magneteinheit gegenüber der Verzahnung des ferromagnetischen Zahnrads in einem Kaffeevollautomaten vorteilhaft zur Positionierung einer Brüheinheit verwendet werden, die einen Antrieb mit Gleichstrommotor und Getriebe aufweist, wobei vor einem Brühvorgang die Brüheinheit zur Initialisierung an ihre beiden Endanschläge gefahren wird. Der Abstand zwischen den beiden Endanschlägen kann mit der Hallsensor-/Magneteinheit gegenüber der Verzahnung des ferromagnetischen Zahnrads, welches mit dem Getriebe gekuppelt ist, überprüft werden. Anschließend kann die Brüheinheit - ausgehend von dem zuletzt angefahrenen Endanschlag - in ihre Arbeitsposition gefahren werden, wobei sie durch die Hallsensor-/Magneteinheit überwacht wird, und von dort aus ohne erneute Initialisierungen weitere angesteuerte Positionen erreichen, was ebenfalls durch die Hallsensor-/Magneteinheit überwacht wird.

Eine weitere günstige Verwendung der Hallsensor-/Magneteinheit in dem Kaffeevollautomaten dient der Bestimmung der Füllhöhe des gemahlenen Kaffees in der Brüheinheit durch Erfassung des Wegs des Kolbens in der Brüheinheit zwischen einer Mahlposition, in der die Brühkammer gemahlenen Kaffee aufnimmt, und der Brühposition des Kolbens, in der der gemahlene Kaffee jeweils vor dem Brühvorgang mit konstantem Druck zusammengedrückt wird. Hierzu wird mittels dem Hallsensor nachgeschalteten Datenverarbeitungsmitteln die Weglänge zwischen Mahlposition und Brühposition ausgewertet.

Die Füllhöhe kann auch daraus ermittelt werden, dass die Drehzahl bzw. ein Drehzahlabfall des Elektromotors in dem Antriebsstrang des Kolbens und damit des mit einem Getriebe in dem Antriebsstrang drehbar verbundenen ferromagnetischen Zahnrads erfasst und ausgewertet wird. Die Drehzahl kann mit den dem Hallsensor nachgeschalteten Datenverarbeitungsmitteln, insbesondere einem Zähler einfach durch Zählen der Hallspannungsschwankungen während eines vorgegebenen konstanten Zeitabschnitts ermittelt werden.

Der Hallsensor der Hallsensor-/Magneteinheit in dem Kaffeevollautomaten wird nach Anspruch 2 dadurch wirksam von dem magnetischen Fluss, der von dem Magneten der Hallsensor-/Magneteinheit ausgeht, durchflutet, dass die Hallsensor-/Magneteinheit so gegenüber der Verzahnung des ferromagnetischen Zahnrads angeordnet ist, dass sich der Hallsensor zwischen dem Magneten und der Verzahnung befindet. Eine solche Hallsensor-/Magneteinheit ist außerdem kompakt.

Zweckmäßig ist nach Anspruch 3 die Hallsensor-/Magneteinheit radial gegenüber einer geraden Stirnverzahnung des ferromagnetischen Zahnrads angeordnet. Die gerade Stirnverzahnung des ferromagnetischen Zahnrads ist leicht realisierbar und hat den Vorteil, dass sich axiale Lageänderungen des ferromagnetischen Zahnrads gegenüber der Hallsensor-/Magneteinheit nicht auf die Hallspannung auswirken.

Zweckmäßig ist nach Anspruch 4 die Hallsensor-/Magneteinheit mit einer ortsfesten Leiterplatte in dem Kaffeevollautomaten kontaktiert. Mit der Leiterplatte können Anschlüsse zur Verbindung mit einer Steuerelektronik, einem Zähler bzw. von Datenverarbeitungsmitteln verbunden sein. Hierbei sind die einfache Montage der Hallsensor-/Magneteinheit an der Leiterplatte und der geringe Verdrahtungsaufwand vorteilhaft.

Nach Anspruch 5 kann das ferromagnetische Zahnrad, dem die Hallsensor-/Getriebeeinheit gegenübersteht, Bestandteil eines Getriebes in dem Antriebsstrang des Kaffeevollautomaten sein. Bei kompaktem Einbau des ferromagnetischen Zahnrads kann je nach Übersetzungsverhältnis die gewünschte drehwinkelabhängige Beeinflussung der Hallsensor-/Magneteinheit entsprechend der Drehung einer Motorwelle des Antriebs dimensioniert werden.

Die Ansprüche 6 und 7 beinhalten die wesentliche Verwendungsalternative der Hallsensor-/Magneteinheit in einem Antriebsstrang des Kaffeevollautomaten, der getriebetechnisch zwischen einem Gleichstrommotor und der positionierbaren Brüheinheit angeordnet ist, oder zwischen dem Gleichstrommotor und einen in der Brüheinheit verstellbaren Kolben angeordnet ist.

Ein Ausführungsbeispiel der Erfindung wird im Folgenden anhand einer Zeichnung mit zwei Figuren erläutert, woraus sich weitere Vorteile der erfindungsgemäßen Verwendung ergeben können. Es zeigen:
- Fig. 1: eine Hallsensor-/Magneteinheit gegenüber einem ferromagnetischen Zahnrad, welches mit einem Getriebe eines Kaffeevollautomaten gekuppelt ist, in einer Draufsicht und
- Fig. 2: die Hallsensor-/Magneteinheit mit einem Ausschnitt des Getriebes, im Wesentlichen in einer etwas größeren Seitenansicht.

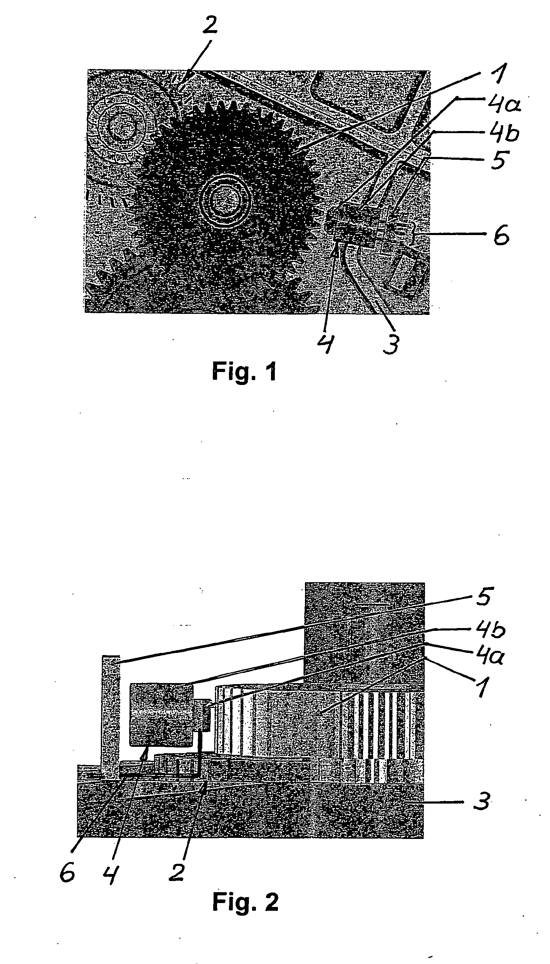

In den Figuren 1 und 2 ist ein ferromagnetisches Zahnrad 1 mit einer geraden Stirnverzahnung gezeigt, das aus einer eisenhaltigen Legierung besteht und Bestandteil eines allgemein mit 2 bezeichneten Getriebes ist. Das Getriebe 2 wird von einem nicht dargestellten Gleichstrommotor angetrieben.

Die Komponenten des Getriebes 2 einschließlich des ferromagnetischen Zahnrads 1 sind auf einer Montageplatte 3 des Kaffeevollautomaten drehbar gelagert. Ein das Getriebe 2 antreibender Gleichstrommotor ist nicht ersichtlich.

Radial gegenüber der Verzahnung des ferromagnetischen Zahnrads 1 und in gleicher Höhe zu der Verzahnung ist eine Hallsensor-/Magneteinheit 4 auf der Montageplatte angebracht, und zwar mittels einer Leiterplatte 5, die auf der Montageplatte 3 montiert ist und mit Anschlüssen 6 kontaktiert ist. Die Anschlüsse 6 führen zu einer nicht dargestellten Steuerelektronik, einem Zähler bzw. einem Analog-Digital-Umsetzer.

Wie aus den Figuren 1 und 2 im Einzelnen ersichtlich, ist der Hallsensor 4a der Hallsensor-/Magneteinheit 4 zwischen einem Dauermagneten 4b und der Verzahnung des ferromagnetischen Zahnrads 1 angeordnet, wobei der Hallsensor 4a der axialen Mitte der Verzahnung gegenübersteht.

Die Zahnteilung des ferromagnetischen Zahnrads 1 ist so groß, dass die der Verzahnung zugewandte Stirnfläche des Hallsensors 4a im Wesentlichen entweder einen Zahn oder einem Zahntal gegenübersteht, woraus sich eine große Flussdichteänderung in Abhängigkeit von dem Drehwinkel des ferromagnetischen Zahnrads 1 ergibt.

Im Einzelnen nicht in der Zeichnung dargestellt ist die vollständige getriebetechnische Verbindung des Getriebes 2 an einer positionierbaren Brühkammer oder einem Brühkolben in der Brühkammer.

### Bezugszahlenliste

- 1: ferromagnetisches Zahnrad
- 2: Getriebe
- 3: Montageplatte
- 4: Hallsensor-Magneteinheit
- 4a: Hallsensor
- 4b: Dauermagnet
- 5: Leiterplatte
- 6: Anschlüsse

## Patentansprüche

1. Kaffeevollautomat mit einer Positionserfassungseinrichtung und/oder Stellgeschwindigkeitserfassungseinrichtung an einer positionierbaren bzw. verstellbaren Einheit des Kaffeevollautomaten, insbesondere einer Brüheinheit und/oder eines Teils der Brüheinheit,
**dadurch gekennzeichnet,**
**dass** mit einem Antriebsstrang der positionierbaren bzw. verstellbaren Einheit ein ferromagnetisches Zahnrad (1) drehbar verbunden ist und dass die Positionserfassungseinrichtung und/oder Stellgeschwindigkeitserfassungseinrichtung eine Hallsensor-/Magneteinheit (4) umfasst, die gegenüber einer Verzahnung des ferromagnetischen Zahnrads (1) angeordnet ist.

2. Kaffeevollautomat nach Anspruch 1,
**dadurch gekennzeichnet,**
**dass** die Hallsensor-/Magneteinheit (4) so gegenüber der Verzahnung des ferromagnetischen Zahnrads (1) angeordnet ist, dass sich der Hallsensor (4a) zwischen dem Magneten (4b) und der Verzahnung befindet.

3. Kaffeevollautomat nach Anspruch 2,
**dadurch gekennzeichnet,**
**dass** die Hallsensor-/Magneteinheit (4) radial gegenüber einer geraden Stirnverzahnung des ferromagnetischen Zahnrads (1) angeordnet ist.

4. Kaffeevollautomat nach einem der vorangehenden Ansprüche,
**dadurch gekennzeichnet,**
**dass** die Hallsensor-/Magneteinheit (4) mit einer ortsfesten Leiterplatte (5) in den Kaffeevollautomaten kontaktiert ist.

5. Kaffeevollautomat nach einem der vorangehenden Ansprüche,
**dadurch gekennzeichnet,**
**dass** das ferromagnetische Zahnrad (1) Bestandteil eines Getriebes (2) **in dem Antriebsstrang ist.**

6. Kaffeevollautomat nach einem der vorangehenden Ansprüche,
**dadurch gekennzeichnet,**
**dass** der Antriebsstrang getriebetechnisch zwischen einem Gleichstrommotor und der positionierbaren Brüheinheit angeordnet ist.

7. Kaffeevollautomat nach einem der Ansprüche 1-5,
**dadurch gekennzeichnet,**
**dass** der Antriebsstrang getriebetechnisch zwischen einem Gleichtstrommotor und einem in der Brüheinheit verstellbaren Kolben angeordnet ist.
